# EUROPEAN PATENT SPECIFICATION

(11) **EP 3 810 961 B1**
(45) Date of publication and mention of the grant of the patent: **23.08.2023**
(21) Application number: 19727018.4
(22) Date of filing: 29.05.2019
(51) Int. Cl.: F16H 61/00, F15B 11/17, F01M 1/02, F01M 1/16

(54) **MULTI-PURPOSE HYDRAULIC SYSTEM**
MEHRZWECKHYDRAULIKSYSTEM
SYSTÈME HYDRAULIQUE MULTI-USAGE

(30) Priority: 25.06.2018 IT 201800006623
(43) Date of publication of application: 28.04.2021
(73) Proprietor: Vhit S.P.A. Societa Unipersonale, 26010 Offanengo (IT)
(72) Inventor: CROSIO, Pietro Francesco, 27049 Stradella (IT); MARIANI, Alberto, 26013 Crema (CR) (IT)
(74) Representative: Robba, Pierpaolo
(86) International application number: PCT/EP2019/063939
(87) International publication number: WO 2020/001908

(56) References cited:
- DE-A1-102015 108 031
- JP-A- 2013 217 492
- US-A1- 2017 307 065
- US-A1- 2017 335 815

## Description

### Technical Sector

The present invention relates to a multi-purpose hydraulic system comprising an electrically powered hydraulic pump and to a method of operating said system.

The multi-purpose hydraulic system has a particular application in the motor-vehicle sector.

### Prior Art

Hydraulic systems for motor vehicles are known where a hydraulic pump actuated by means of an electric motor (electric pump) supplies a liquid to a using device.

For example, in hybrid vehicles hydraulic systems are used where an electric hydraulic pump is actuated, generally when the internal combustion engine is inactive, in order to supply the cooling liquid to the gear box and/or liquid for selection of the gear ratios. The document JP2014213635 A describes, for example, a lubricating system for a hybrid vehicle in which a primary oil pump mechanically actuated by the internal combustion engine of the vehicle feeds a hydraulic circuit in order to lubricate the internal combustion engine, while a secondary electric oil pump is actuated by an electronic control unit when the internal combustion engine - and therefore the primary oil pump - are inactive, in order to lubricate the power transducers of the hybrid population system of the vehicle.

Another known application envisages the use of electric hydraulic pumps for lubrication of an internal combustion engine, said pumps assisting a main pump mechanically actuated by the same internal combustion engine.

The document US2013319366 A1 describes, for example, a system comprising a primary oil pump actuated mechanically by an internal combustion engine, a secondary electric oil pump and a non-return valve designed to prevent the flow of oil from the outlet of the primary pump to the outlet of the secondary electric pump. An electronic control device is configured to actuate the secondary electric pump when the primary pump is inactive. This system is used as a hydraulic pressure generator or also to supply lubricating liquid.

A further known application is illustrated in EP3150811 A1, which describes a system for lubricating and cooling an internal combustion engine, which comprises hydraulic actuating members actuated by means of the pressurized oil of the lubrication and cooling system. The system comprises a mechanical pump mechanically actuated by the internal combustion engine and connected to the hydraulic actuating members, and an auxiliary electric pump which feeds a nozzle of an oil jet cooling system for cooling the pistons of the internal combustion engine. The flow exiting the auxiliary electric pump may be diverted from the nozzle and directed towards the electrical actuating members by means of an electric valve controlled by an electronic control unit, in order to increase the pressure supplied to the actuating members.

Further multi-purpose hydraulic systems are known from JP 2013 217492 A, DE 10 2015 108031 A1, and US 2017/335815 A1.

A further example of an application of electric hydraulic pumps relates to vehicles provided with a start-stop system, namely a system for automatically switching off and switching on again the internal combustion engine in order to reduce the time for which the engine remains active when the vehicle is at a standstill, or with a "sailing" function, namely for disengaging the transmission from the internal combustion engine when the foot is raised from the accelerator pedal so that more efficient use is made of the kinetic energy stored by the vehicle. In both the aforementioned cases, the electric hydraulic pump is actuated so as to take over from the mechanical pump which is no longer in operation owing to deactivation of the internal combustion engine.

The hydraulic systems for motor vehicles equipped with a secondary or auxiliary hydraulic pump actuated by means of an electric motor have the problem associated with the complex management of the various applications, which envisages (depending on the number and complexity thereof) at least an electric valve controlled by an electronic control unit and/or the need for further pumps electrically controlled for the various applications, something which results in a greater energy consumption and therefore higher costs and greater polluting emissions.

The object of the present invention is to overcome the problems and limitations of the prior art by providing a hydraulic system able to manage several circuits with various applications without the aid of additional electrical components, allowing savings in cost, while optimizing the consumption levels and reducing the harmful emissions. This object as well as other objects are achieved with the multi-purpose hydraulic system as claimed in the attached claims.

### Description of the Invention

The multi-purpose hydraulic system for motor vehicles according to the present invention comprises a primary hydraulic circuit and a secondary hydraulic circuit. The primary hydraulic circuit comprises a primary hydraulic pump and at least one primary using device communicating with a delivery duct of the primary hydraulic pump. The secondary hydraulic circuit comprises an electrically actuated secondary hydraulic pump and at least one secondary using device.

In accordance with the present invention, the multi-purpose hydraulic system comprises a diverter valve applied to the delivery duct of the secondary hydraulic pump, for example directly downstream of the secondary hydraulic pump. This diverter valve is designed to connect selectively and alternately the delivery duct of the secondary hydraulic pump to the at least one secondary using device or to the at least one primary using device depending on the operation status of the primary hydraulic pump, namely depending on whether the primary hydraulic pump is in operation or not.

The diverter valve is an automatic hydraulic valve, i.e. a valve which is operated automatically as a result of hydraulic pressures produced by the primary hydraulic pump and the secondary hydraulic pump. In particular, the diverter valve, which is preferably normally open towards the at least one primary using device, is configured to open towards the at least one secondary using device when the primary hydraulic pump is in operation, by means of a hydraulic pressure generated by the primary hydraulic pump.

Owing to the fact that the diverter valve is an automatic hydraulic valve, the multi-purpose hydraulic system according to the present invention allows at least two functions performed by an electric hydraulic pump in a motor vehicle to be combined without the aid of additional electrical components, by feeding two hydraulic circuits alternately. This allows cost savings to be obtained, while optimizing consumption and reducing harmful emissions.

Preferably, the diverter valve is a three-way and two-position valve, in which a first way is a first outlet selectively connected to the at least one primary using device, a second way is a second outlet selectively connected to the at least one secondary using device, and a third way is an inlet connected to the delivery duct of the secondary hydraulic pump. The diverter valve is normally in a first one of the two positions, in which the inlet is connected solely to the first outlet and is able to switch, by means of suitable actuating elements, from the first one of the two positions to a second one of the two positions, in which the inlet is connected solely to the second outlet.

Preferably, the actuating elements comprise a first actuating surface acted upon by the liquid exiting the primary hydraulic pump, a second actuating surface acted upon by the liquid exiting the secondary hydraulic pump, and a spring, wherein the second actuating surface and the spring act in order to switch the diverter valve to the first one of the two positions, while the first actuating surface acts in order to switch the diverter valve to the second one of the two positions.

The multi-purpose hydraulic system further comprises preferably a connecting duct between the primary circuit and the secondary circuit, comprising an overpressure hydraulic valve of the non-return type, designed to allow a liquid flow only from the primary circuit towards the secondary circuit when a predetermined pressure threshold is exceeded. Advantageously, this is useful in the case of cold operation of the hydraulic system, when the secondary hydraulic pump is not in operation. In this situation, in fact, the connecting duct and the overpressure valve allow part of the liquid exiting the primary hydraulic pump to be conveyed towards the secondary circuit and therefore towards the at least one secondary using device.

The operation of the multi-purpose hydraulic system according to the present invention comprises the steps of:
- hydraulically connecting the primary hydraulic pump, mechanically actuated by the internal combustion engine, to the at least one primary using device, wherein said at least one primary using device is a lubrication circuit of the internal combustion engine;
- hydraulically connecting, selectively and alternately, by means of the diverter valve, the secondary hydraulic pump to the at least one primary using device or to the at least one secondary using device, depending on the operation status of the primary hydraulic pump, wherein said at least one secondary using device is an oil jet cooling system configured for cooling the pistons of said internal combustion engine.

The step of selectively and alternately connecting the secondary hydraulic pump to the at least one primary using device or to the at least one secondary using device comprises the steps of:
- switching the diverter valve so as to connect the secondary hydraulic pump to the at least one secondary using device when the primary hydraulic pump is in operation, by means of the hydraulic pressure generated by the primary hydraulic pump in the primary hydraulic circuit;
- switching the diverter valve so as to connect the secondary hydraulic pump to the at least one primary using device when the primary hydraulic pump is not in operation in said motor vehicle provided with a start-stop system or with a sailing function, so as to prevent wear of parts of the said internal combustion engine upon restarting thereof.

The method of operating the multi-purpose hydraulic circuit further comprises the step of hydraulically connecting the primary hydraulic pump to said oil jet cooling system when the primary hydraulic pump is in operation and the secondary hydraulic pump is not in operation, by means of the aforementioned connecting duct and the overpressure valve.

According to the invention the primary hydraulic circuit comprises an internal combustion engine, the primary using device is a lubrication circuit for the internal combustion engine and the primary hydraulic pump is mechanically actuated by the internal combustion engine. Furthermore, the secondary using device is an oil jet cooling system, and the secondary hydraulic pump feeds the secondary hydraulic circuit which is able to cool the pistons of the internal combustion engine, by means of said oil jet cooling system, when the internal combustion engine is active, and therefore the primary hydraulic pump is in operation, while it feeds the primary hydraulic circuit when the internal combustion engine is inactive, and therefore the primary hydraulic pump is not in operation. This latter condition occurs when vehicles provided with a start-stop system stop, or when the engine is disengaged from the transmission following release of the accelerator pedal of vehicles provided with the "sailing" function.

### Brief Description of the Figures

These and other characteristic features and advantages of the present invention will emerge more clearly from the following description of preferred embodiments provided by way of a non-limiting example with reference to the attached drawings in which:
- Figure 1 shows a schematic view of the multi-purpose hydraulic system according to an embodiment of the present invention;

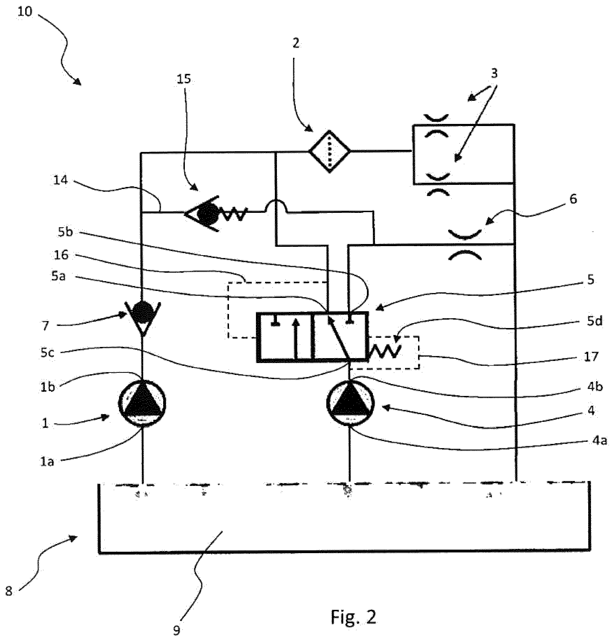

- Figure 2 shows a schematic view of the multi-purpose hydraulic system according to a further embodiment of the present invention.

### Description of some Preferred Embodiments of the Invention

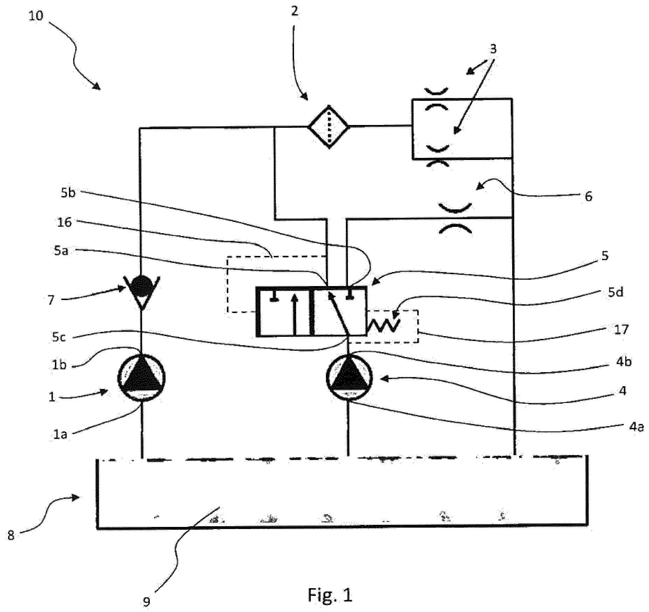

With reference to Figure 1, a multi-purpose hydraulic system 10 for motor vehicles according to a preferred embodiment of the invention comprises a primary hydraulic circuit and a secondary hydraulic circuit.

The primary hydraulic circuit comprises a tank 8 containing a liquid 9, a primary hydraulic pump 1, which is mechanically actuated by the internal combustion engine of the vehicle, communicating with the tank 8 via an intake duct 1a of the pump and designed to pump the liquid contained in the tank 8, and at least one primary using device 3 communicating with a delivery duct 1b of the primary pump 1, from which it receives the pumped liquid and is connected downstream to the tank 8. Preferably a filter 2 is present upstream of the at least one using device 3.

The secondary hydraulic circuit comprises the tank 8, a secondary hydraulic pump 4 actuated by an electric motor (not shown) driven by an electronic control unit ECU (not shown). The secondary hydraulic pump 4 communicates, via an intake duct 4a, with the tank 8 and, via a delivery duct 4b, with at least one secondary using device 6 designed to receive the liquid pumped by the said pump 4.

In accordance with the present invention, a diverter valve 5 is present along the delivery duct 4a of the secondary hydraulic pump 4, for example directly downstream of the secondary hydraulic pump 4, and is able to connect selectively and alternately the delivery duct 4b of the secondary hydraulic pump 4 to the at least one secondary using device 6 or to the at least one primary using device 3, which is preferably branched off upstream of the filter 2, depending on the operation status of the primary hydraulic pump 1, namely depending on whether the primary hydraulic pump is in operation or not.

The diverter valve 5 is an automatic hydraulic valve, i.e. a valve, operation of which occurs automatically as a result of hydraulic pressures, in particular hydraulic pressures produced by the primary hydraulic pump 1 and by the secondary hydraulic pump 4. The diverter valve 5 is, for example, a valve of the known three-way and two-position type, in which a first way is a first outlet 5a, connected selectively upstream of the at least one primary using device 3 and preferably upstream of the filter 2, a second way is a second outlet 5b, connected selectively upstream of the at least one secondary using device 6, and a third way is an inlet 5c, connected to the delivery duct 4b of the secondary hydraulic pump 4. The diverter valve 5 is able to switch between a first one of the two positions, in which the inlet 5c is solely connected to the first outlet 5a, and a second one of the two positions, in which the inlet 5c is solely connected to the second outlet 5b. This switching is performed by means of actuating elements of the valve, of the known type, which comprise preferably a first actuating surface (not shown) acted upon by the pumped liquid exiting the primary hydraulic pump 1 via a first duct 16, a second actuating surface (not shown) acted upon by the liquid exiting the secondary pump 4 via a second duct 17, and a spring 5d. In particular, the diverter valve 5, which is normally in the first position, i.e. is normally open towards the at least one primary using device 3, is configured to open towards the at least one secondary using device 6, i.e. to switch towards the second position, when the primary hydraulic pump 1 is in operation, owing to the force generated by the liquid acting on the first actuating surface, said force overcoming the opposing force generated by the spring 5d and the liquid acting on the second actuating surface.

Preferably, the diverter valve 5 is configured to remain open towards the at least one secondary using device 6 also when the propulsion member which operates the primary hydraulic pump 1 is operating at a minimum, namely when the pressure of the liquid exiting the primary hydraulic pump 1 is approximately equal to the pressure of the liquid exiting the secondary hydraulic pump 4. This is obtained, for example, by designing the first actuating surface of the diverter valve 5 so as to have dimensions larger than those of the second actuating surface.

It should be noted that the illustration of the diverter valve 5 shown in the figures is only a schematic illustration and is not intended to illustrate constructional details of the said valve.

The first duct 16 and the second duct 17 also act, preferably, as pressure detection ducts for detecting, respectively, the pressure in the primary circuit, for example upstream of the filter 2, and the pressure in the delivery duct 4b of the secondary hydraulic pump 4.

Optionally, a non-return valve 7 is present downstream of the primary hydraulic pump 1 and is designed to prevent a backflow of liquid from the delivery duct 4b of the secondary hydraulic pump 4 towards the delivery duct 1b of the primary hydraulic pump 1.

In accordance with a further embodiment, the multi-purpose hydraulic system 10 comprises, in addition to the elements described hitherto, a connecting duct 14 between the primary circuit, branched off downstream of the primary hydraulic pump 1 and upstream of the filter 2, and the secondary circuit, branched off downstream of the diverter valve 5 and upstream of the at least one secondary using device 6. The connecting duct 14 comprises a hydraulic overpressure valve 15, of the non-return type, designed to allow a liquid flow only from the primary circuit towards the secondary circuit when a given threshold pressure is exceeded. Preferably, the hydraulic overpressure valve 15 is calibrated so that the threshold pressure is lower than the operating pressure of the primary hydraulic pump 1 and higher than the operating pressure of the secondary pump 4. In this way, the flow of liquid from the primary circuit to the secondary circuit occurs when only the primary hydraulic pump 1 is in operation, but does not occur when only the secondary hydraulic pump 4 is in operation.

Advantageously, the aforementioned embodiment is useful in the case of cold operation of the system, when the secondary hydraulic pump 4 is not in operation. In this situation, in fact, the connecting duct 14 and the overpressure valve 15 allow part of the liquid exiting the primary hydraulic pump 1 to be conveyed towards the secondary circuit and therefore towards the at least one secondary using device 6. Operation of the hydraulic system 10 is now described.

Under normal running conditions, both the hydraulic pumps are in operation. The primary hydraulic pump 1 sends the pumped liquid to the at least one primary using device 3 and at the same time causes switching of the diverter valve 5 towards its second position, such that the secondary hydraulic pump 4 sends the liquid pumped to the at least one secondary using device 6, thus satisfying the flowrate and pressure requirements of the secondary hydraulic circuit.

Preferably, the diverter valve 5 remains switched in the second position also when the propulsion member which actuates the primary hydraulic pump 1 is operating at a minimum.

When, instead, the primary hydraulic pump 1 is not in operation, the diverter valve 5 switches towards its first operating position such that the secondary hydraulic pump 4 sends the liquid 9 to the at least one primary using device 3, feeding the primary hydraulic circuit as required during this phase. Optionally, during this phase, the backflow of fluid from the delivery duct 4b of the secondary hydraulic pump 4 towards the delivery duct 1b of the primary hydraulic pump 1 is prevented owing to the non-return valve 7.

Finally, in accordance with the embodiment where the connecting duct 14 is provided between the primary circuit and the secondary circuit, when only the primary hydraulic pump 1 is in operation, for example in the case of cold operation as described above, the primary hydraulic pump 1 feeds both the primary circuit and the secondary circuit. Some examples of application of the multi-purpose hydraulic system 10 described above are illustrated below.

According to the invention the primary hydraulic circuit comprises an internal combustion engine, the primary using device is a lubrication circuit for the internal combustion engine and the primary hydraulic pump is actuated mechanically by the internal combustion engine. The secondary hydraulic circuit, comprising an electrically actuated secondary hydraulic pump, is instead used to feed an oil jet cooling system for cooling the pistons of the internal combustion engine.

In accordance with this example of embodiment, when the internal combustion engine is inactive, for example in the case of inactivity due to stoppage of vehicles provided with a start-stop system, or when the engine is disengaged from the transmission following release of the accelerator pedal of vehicles provided with the "sailing" function, the secondary hydraulic pump feeds the circuit lubricating the internal combustion engine, so as to prevent wear of parts of the said engine upon restarting thereof.

Advantageously, owing to the presence of the diverter valve, the multi-purpose hydraulic system according to the present invention allows at least two functions performed by an electric hydraulic pump in a motor vehicle to be combined without the aid of additional electrical components, feeding two hydraulic circuits alternately. This allows cost savings to be obtained along with optimum consumption levels and a reduction in harmful emissions.

In accordance with further embodiments a multi-purpose hydraulic system comprising more than two hydraulic circuits may be provided.

The multi-purpose hydraulic system as described and illustrated may be subject to further variations and modifications, falling within the scope of the claims.

## Claims

1. Multi-purpose hydraulic system for a motor vehicle, said system (10) comprising a primary hydraulic circuit, a secondary hydraulic circuit and a diverter valve (5), the primary hydraulic circuit comprising a primary hydraulic pump (1), and at least one primary using device (3) communicating with a delivery duct (1b) of the primary hydraulic pump (1), the secondary hydraulic circuit comprising an electrically actuated secondary hydraulic pump (4) and at least one secondary using device (6) communicating with a delivery duct (4b) of the secondary hydraulic pump (4), wherein the diverter valve (5) is applied to the delivery duct (4b) of the secondary hydraulic pump (4) and is configured to selectively and alternately connect the delivery duct (4b) of the secondary hydraulic pump (4) to the at least one secondary using device (6) or to the at least one primary using device (3) depending on the operation status of the primary hydraulic pump (1),
wherein the diverter valve (5) is an automatic hydraulic valve configured to open towards the at least one secondary using device (6) - when the primary hydraulic pump (1) is being operated - by means of the hydraulic pressure generated by the primary hydraulic pump (1) within the primary hydraulic circuit,
**characterized in that** said primary hydraulic circuit comprises an internal combustion engine,
**in that** said at least one primary using device (3) is a lubrication circuit for the internal combustion engine, **in that** the primary hydraulic pump (1) is mechanically actuated by the internal combustion engine, and **in that** said at least one secondary using device (6) is an oil jet cooling system, wherein
the secondary hydraulic pump (4) feeds the secondary hydraulic circuit arranged to cool the pistons of the internal combustion engine, by means of said oil jet cooling system, when the internal combustion engine is in operation, and feeds the primary hydraulic circuit when the internal combustion engine is inactive in said motor vehicle provided with a start-stop system or with a "sailing" function, so as to prevent wear of parts of the said internal combustion engine upon restarting thereof.

2. System according to claim 1, wherein the diverter valve (5) is normally open towards the at least one primary using device (3).

3. System according to claim 1 or 2, wherein the diverter valve (5) is a 3-way/2-position valve, in which a first way is a first outlet (5a) selectively connected to the at least one primary using device (3), a second way is a second outlet (5b) selectively connected to the at least one secondary using device (6), and a third way is an inlet (5c) connected to the delivery duct (4b) of the secondary hydraulic pump (4), said diverter valve (5) being normally in a first one of the two positions, in which the inlet (5c) is connected solely to the first outlet (5a), said valve being adapted to switch, by means of actuating elements, from the first one of the two positions to a second one of the two positions, in which the inlet (5c) is connected solely to the second outlet (5b).

4. System according to claim 3, wherein the actuating elements comprise a first actuating surface acted upon by a liquid exiting the primary hydraulic pump (1), a second actuating surface acted upon by the liquid exiting the secondary hydraulic pump (4), and a spring (5d), wherein the second actuating surface and the spring (5d) act in order to switch the diverter valve (5) to the first one of the two positions and the first actuating surface acts in order to switch the diverter valve (5) to the second one of the two positions.

5. System according to any of the claims 1 to 4, further comprising a connecting duct (14) between the primary circuit and the secondary circuit, said connecting duct (14) comprising an overpressure hydraulic valve (15) of the non-return type, arranged to allow a liquid flow only from the primary circuit toward to the secondary circuit when a predetermined pressure threshold is exceeded.

6. Method of operating a multi-purpose hydraulic system (10) for a motor vehicle, comprising the steps of:
- hydraulically connecting a primary hydraulic pump (1), mechanically actuated by an internal combustion engine, to at least one primary using device (3), wherein said at least one primary using device (3) is a lubrication circuit of the internal combustion engine;
- hydraulically connecting, selectively and alternately, by means of an automatic hydraulic diverter valve (5), a secondary, electrically actuated hydraulic pump (4) to the at least one primary using device (3) or to at least one secondary using device (6), depending on the operation status of the primary hydraulic pump (1), wherein said at least one secondary using device (6) is an oil jet cooling system configured for cooling the pistons of said internal combustion engine,
wherein said step of selectively and alternately connecting a secondary hydraulic pump (4) comprises the steps of:
- switching the automatic hydraulic diverter valve (5) so as to connect the secondary hydraulic pump (4) to the at least one secondary using device (6) - when the primary hydraulic pump (1) is being operated - by means of the hydraulic pressure generated by the primary hydraulic pump (1), and
- switching the automatic hydraulic diverter valve (5) so as to connect the secondary hydraulic pump (4) to the at least one primary using device (3) when the primary hydraulic pump (1) is not in operation in said motor vehicle provided with a start-stop system or with a "sailing" function, so as to prevent wear of parts of the said internal combustion engine upon restarting thereof.

7. Method according to claim 6, further comprising the step of:
- hydraulically connecting the primary hydraulic pump (1) to said oil jet cooling system (6) when the primary hydraulic pump (1) is in operation and the secondary hydraulic pump (4) is not in operation.

## Patentansprüche

1. Mehrzweck-Hydrauliksystem für ein Motorfahrzeug, wobei das System (10) einen primären Hydraulikkreis, einen sekundären Hydraulikkreis und ein Umschaltventil (5) umfasst, wobei der primäre Hydraulikkreis eine primäre Hydraulikpumpe (1) und mindestens ein primäres verwendendes Gerät (3) umfasst, die mit einer Förderleitung (1b) der primären Hydraulikpumpe (1) in Verbindung steht, wobei der sekundäre Hydraulikkreis eine elektrisch betätigte sekundäre Hydraulikpumpe (4) und mindestens ein sekundäres verwendendes Gerät (6) umfasst, die mit einer Förderleitung (4b) der sekundären Hydraulikpumpe (4) in Verbindung steht, wobei das Umschaltventil (5) an der Förderleitung (4b) der sekundären Hydraulikpumpe (4) angebracht und so ausgebildet ist, dass es die Förderleitung (4b) der sekundären Hydraulikpumpe (4) in Abhängigkeit vom Betriebszustand der primären Hydraulikpumpe (1) wahlweise und abwechselnd mit der mindestens einen sekundären Nutzvorrichtung (6) oder mit der mindestens einen primären Nutzvorrichtung (3) verbindet,
wobei das Umschaltventil (5) ein automatisches Hydraulikventil ist, das ausgebildet ist, dass es sich - wenn die primäre Hydraulikpumpe (1) in Betrieb ist - mittels des von der primären Hydraulikpumpe (1) im primären Hydraulikkreislauf erzeugten Hydraulikdrucks in Richtung des mindestens einen sekundären verwendenden Geräts (6) öffnet,
**dadurch gekennzeichnet, dass** der primäre Hydraulikkreislauf einen Verbrennungsmotor umfasst,
dass das mindestens eine primäre verwendende Gerät (3) ein Schmierkreislauf für den Verbrennungsmotor ist,
dass die primäre Hydraulikpumpe (1) mechanisch durch den Verbrennungsmotor betätigt wird, und dass das mindestens eine sekundäre verwendende Gerät (6) ein Ölstrahl-Kühlsystem ist, wobei die sekundäre Hydraulikpumpe (4) den sekundären Hydraulikkreislauf speist, der so angeordnet ist, dass er die Kolben des Verbrennungsmotors mittels des Ölstrahl-Kühlsystems kühlt, wenn der Verbrennungsmotor in Betrieb ist, und den primären Hydraulikkreislauf speist, wenn der Verbrennungsmotor in dem mit einem Start-Stopp-System oder einer "Segelfunktion" ausgestatteten Motorfahrzeug inaktiv ist, um den Verschleiß von Teilen des Verbrennungsmotors beim erneuten Anlassen zu verhindern.

2. System nach Anspruch 1, wobei das Umschaltventil (5) normalerweise in Richtung des mindestens einen primären verwendenden Geräts (3) geöffnet ist.

3. System nach Anspruch 1 oder 2, wobei das Umschaltventil (5) ein 3-Wege-/2-Stellungs-Ventil ist, bei dem ein erster Weg ein erster Auslass (5a) ist, der selektiv mit dem mindestens einen primären verwendenden Gerät (3) verbunden ist, ein zweiter Weg ein zweiter Auslass (5b) ist, der selektiv mit dem mindestens einen sekundären verwendenden Gerät (6) verbunden ist, und ein dritter Weg ein Einlass (5c) ist, der mit der Förderleitung (4b) der sekundären Hydraulikpumpe (4) verbunden ist, wobei sich das Umschaltventil (5) normalerweise in einer ersten der beiden Stellungen befindet, in der der Einlass (5c) ausschließlich mit dem ersten Auslass (5a) verbunden ist, wobei das Ventil dazu geeignet ist, mittels Betätigungselementen von der ersten der beiden Stellungen in eine zweite der beiden Stellungen zu schalten, in der der Einlass (5c) ausschließlich mit dem zweiten Auslass (5b) verbunden ist.

4. System nach Anspruch 3, wobei die Betätigungselemente eine erste Betätigungsoberfläche, die von einer aus der primären Hydraulikpumpe (1) austretenden Flüssigkeit beaufschlagt wird, eine zweite Betätigungsoberfläche, die von der aus der sekundären Hydraulikpumpe (4) austretenden Flüssigkeit beaufschlagt wird, und eine Feder (5d) umfassen, wobei die zweite Betätigungsoberfläche und die Feder (5d) wirken, um das Umschaltventil (5) in die erste der beiden Stellungen zu schalten und die erste Betätigungsoberfläche wirkt, um das Umschaltventil (5) in die zweite der beiden Stellungen zu schalten.

5. System nach einem der Ansprüche 1 bis 4, das ferner eine Verbindungsleitung (14) zwischen dem primären Kreislauf und dem sekundären Kreislauf umfasst, wobei die Verbindungsleitung (14) ein hydraulisches Überdruckventil (15) vom Rückschlagtyp umfasst, das so angeordnet ist, dass es einen Flüssigkeitsstrom nur vom primären Kreislauf zum sekundären Kreislauf zulässt, wenn ein vorbestimmter Druckschwellenwert überschritten wird.

6. Verfahren zum Betreiben eines Mehrzweck-Hydrauliksystems (10) für ein Motorfahrzeug, das die folgenden Schritte umfasst:
- hydraulisches Verbinden einer primären Hydraulikpumpe (1), die mechanisch durch einen Verbrennungsmotor betätigt wird, mit mindestens einem primären verwendenden Gerät (3), wobei das mindestens eine primäre verwendende Gerät (3) ein Schmierkreislauf des Verbrennungsmotors ist;
- hydraulisches Verbinden, wahlweise und abwechselnd, mittels eines automatischen hydraulischen Umschaltventils (5), einer sekundären, elektrisch betätigten Hydraulikpumpe (4) mit dem mindestens einen primären Nutzvorrichtung (3) oder mit mindestens einem sekundären verwendendem Gerät (6), abhängig vom Betriebszustand der primären Hydraulikpumpe (1), wobei das mindestens eine sekundäre verwendende Gerät (6) ein Ölstrahlkühlsystem ist, das zum Kühlen der Kolben des Verbrennungsmotors ausgebildet ist,
wobei der Schritt des selektiven und abwechselnden Anschließens einer sekundären Hydraulikpumpe (4) die folgenden Schritte umfasst:
- Schalten des automatischen hydraulischen Umschaltventils (5), um die sekundäre Hydraulikpumpe (4) mit dem mindestens einen sekundären verwendenden Gerät (6) zu verbinden - wenn die primäre Hydraulikpumpe (1) in Betrieb ist - mittels des von der primären Hydraulikpumpe (1) erzeugten Hydraulikdrucks, und
- Umschalten des automatischen hydraulischen Umschaltventils (5), um die sekundäre Hydraulikpumpe (4) mit dem mindestens einen primären verwendenden Gerät (3) zu verbinden, wenn die primäre Hydraulikpumpe (1) in dem Motorfahrzeug nicht in Betrieb ist, das mit einem Start-Stopp-System oder einer "Segelfunktion" versehen ist, um den Verschleiß von Teilen des Verbrennungsmotors beim erneuten Anlassen zu verhindern.

7. Verfahren nach Anspruch 6, das ferner den folgenden Schritt umfasst:
- hydraulische Verbindung der primären Hydraulikpumpe (1) mit dem Ölstrahl-Kühlsystem (6), wenn die primäre Hydraulikpumpe (1) in Betrieb ist und die sekundäre Hydraulikpumpe (4) nicht in Betrieb ist.

## Revendications

1. Système hydraulique à usage multiple pour un véhicule à moteur, ledit système (10) comprenant un circuit hydraulique primaire, un circuit hydraulique secondaire et une vanne de dérivation (5), le circuit hydraulique primaire comprenant une pompe hydraulique primaire (1), et au moins un dispositif d'utilisation primaire (3) communiquant avec une canalisation de refoulement (1b) de la pompe hydraulique primaire (1), le circuit hydraulique secondaire comprenant une pompe hydraulique secondaire (4) actionnée électriquement et au moins un dispositif d'utilisation secondaire (6) communiquant avec une conduite de refoulement (4b) de la pompe hydraulique secondaire (4), dans lequel la vanne de dérivation (5) est appliquée à la conduite de refoulement (4b) de la pompe hydraulique secondaire (4) et est configurée pour raccorder sélectivement et en alternance la conduite de refoulement (4b) de la pompe hydraulique secondaire (4) à l'au moins un dispositif d'utilisation secondaire (6) ou à l'au moins un dispositif d'utilisation primaire (3) en fonction de l'état de fonctionnement de la pompe hydraulique primaire (1),
dans lequel la vanne de dérivation (5) est une vanne hydraulique automatique configurée pour s'ouvrir vers l'au moins un dispositif d'utilisation secondaire (6) - lorsque la pompe hydraulique primaire (1) est en cours de fonctionnement - au moyen de la pression hydraulique générée par la pompe hydraulique primaire (1) au sein du circuit hydraulique primaire,
**caractérisé en ce que** ledit circuit hydraulique primaire comprend un moteur à combustion interne,
**en ce que** ledit au moins un dispositif d'utilisation primaire (3) est un circuit de lubrification pour le moteur à combustion interne, **en ce que** la pompe hydraulique primaire (1) est actionnée mécaniquement par le moteur à combustion interne,
et **en ce que** ledit au moins un dispositif d'utilisation secondaire (6) est un système de refroidissement de gicleur d'huile,
dans lequel la pompe hydraulique secondaire (4) alimente le circuit hydraulique secondaire agencé pour refroidir les pistons du moteur à combustion interne, au moyen dudit système de refroidissement de gicleur d'huile, lorsque le moteur à combustion interne est en fonctionnement, et alimente le circuit hydraulique primaire lorsque le moteur à combustion interne est inactif dans ledit véhicule à moteur pourvu d'un système marche-arrêt ou d'une fonction « roues libres », de façon à empêcher une usure de pièces dudit moteur à combustion interne lors de son redémarrage.

2. Système selon la revendication 1, dans lequel la vanne de dérivation (5) est normalement ouverte vers l'au moins un dispositif d'utilisation primaire (3).

3. Système selon la revendication 1 ou 2, dans lequel la vanne de dérivation (5) est une vanne à 3 voies/2 positions, dans laquelle une première voie est une première sortie (5a) raccordée sélectivement à l'au moins un dispositif d'utilisation primaire (3), une deuxième voie est une seconde sortie (5b) raccordée sélectivement à l'au moins un dispositif d'utilisation secondaire (6), et une troisième voie est une entrée (5c) raccordée à la conduite de refoulement (4b) de la pompe hydraulique secondaire (4), ladite vanne de dérivation (5) étant normalement dans une première des deux positions, dans laquelle l'entrée (5c) est raccordée uniquement à la première sortie (5a), ladite vanne étant adaptée pour commuter, au moyen d'éléments d'actionnement, de la première des deux positions à une seconde des deux positions, dans laquelle l'entrée (5c) est raccordée uniquement à la seconde sortie (5b).

4. Système selon la revendication 3, dans lequel les éléments d'actionnement comprennent une première surface d'actionnement sur laquelle agit un liquide sortant de la pompe hydraulique primaire (1), une seconde surface d'actionnement sur laquelle agit le liquide sortant de la pompe hydraulique secondaire (4), et un ressort (5d), dans lequel la seconde surface d'actionnement et le ressort (5d) agissent afin de commuter la vanne de dérivation (5) à la première des deux positions et la première surface d'actionnement agit afin de commuter la vanne de dérivation (5) à la seconde des deux positions.

5. Système selon l'une quelconque des revendications 1 à 4, comprenant en outre une conduite de raccordement (14) entre le circuit primaire et le circuit secondaire, ladite conduite de raccordement (14) comprenant une vanne hydraulique de surpression (15) du type antiretour, agencée pour permettre un écoulement de liquide seulement du circuit primaire vers le circuit secondaire lorsqu'un seuil de pression prédéterminé est dépassé.

6. Procédé de fonctionnement d'un système hydraulique à usage multiple (10) pour un véhicule à moteur, comprenant les étapes de :
- raccordement hydraulique d'une pompe hydraulique primaire (1), actionnée mécaniquement par un moteur à combustion interne, à au moins un dispositif d'utilisation primaire (3), dans lequel ledit au moins un dispositif d'utilisation primaire (3) est un circuit de lubrification du moteur à combustion interne ;
- raccordement hydraulique, sélectif et en alternance, au moyen d'une vanne de dérivation (5) hydraulique automatique, d'une pompe hydraulique secondaire (4) actionnée électriquement à l'au moins un dispositif d'utilisation primaire (3) ou à au moins un dispositif d'utilisation secondaire (6), en fonction de l'état de fonctionnement de la pompe hydraulique primaire (1), dans lequel ledit au moins un dispositif d'utilisation secondaire (6) est un système de refroidissement de gicleur d'huile configuré pour refroidir les pistons dudit moteur à combustion interne,
dans lequel ladite étape de raccordement sélectif et en alternance d'une pompe hydraulique secondaire (4) comprend les étapes de :
- commutation de la vanne de dérivation (5) hydraulique automatique de façon à raccorder la pompe hydraulique secondaire (4) à l'au moins un dispositif d'utilisation secondaire (6) - lorsque la pompe hydraulique primaire (1) est en cours de fonctionnement - au moyen de la pression hydraulique générée par la pompe hydraulique primaire (1), et
- commutation de la vanne de dérivation (5) hydraulique automatique de façon à raccorder la pompe hydraulique secondaire (4) à l'au moins un dispositif d'utilisation primaire (3) lorsque la pompe hydraulique primaire (1) n'est pas en fonctionnement dans ledit véhicule à moteur pourvu d'un système marche-arrêt ou d'une fonction « roues libres », de façon à empêcher une usure de pièces dudit moteur à combustion interne lors de son redémarrage.

7. Procédé selon la revendication 6, comprenant en outre l'étape de :
- raccordement hydraulique de la pompe hydraulique primaire (1) audit système de refroidissement de gicleur d'huile (6) lorsque la pompe hydraulique primaire (1) est en fonctionnement et que la pompe hydraulique secondaire (4) n'est pas en fonctionnement.
